# EUROPEAN PATENT APPLICATION

(11) **EP 2 108 604 A1**
(43) Date of publication of application: **14.10.2009**
(21) Application number: 09157368.3
(22) Date of filing: 06.04.2009
(51) Int. Cl.: B65G 47/84

(54) **Gripping unit for a transfer device**

(30) Priority: 07.04.2008 IT TO20080264
(71) Applicant: OPM S.p.A., 12066 Monticello d'Alba (IT)
(72) Inventor: SALVANO, Elio, 12051, ALBA (IT)
(74) Representative: Jorio, Paolo

(57) **Abstract**

A gripping unit (30) for a transfer device (1) has a supporting member (34) conveyed, in use, along a horizontal path (18) by a belt (17); the unit (30) also has a gripping head (51), which grips a product (2) and, with respect to the supporting member (34), is rotatable about a vertical axis (35) and is axially translatable under the action of a tappet element (64) coupled, in use, to a cam (27); transmission (65) for converting the translational motion into rotational motion cause the gripping head (51) to rotate axially in response to the translation of such gripping head (51).

## Description

The present invention relates to a gripping unit for a transfer device.

European patent EP0711719 describes a transfer device provided with a plurality of gripping units arranged along an annular path and conveyed along such annular path to transfer a series of products from a supply conveyer to a delivery conveyer. In particular, the gripping units comprise respective suction cups, which are first lowered and then raised to pick the products up from the supply conveyer, rotated by 90° about respective vertical axes while moving towards the delivery conveyer, and then lowered in order to deposit the products onto the delivery conveyer.

The vertical translation and rotation of the suction cups are generated by respective cam and tappet transmissions, which comprise respective cams mounted on fixed structures of the transfer device along the annular path.

The prior art solution described above is not particularly satisfactory, in that it is relatively complex. In particular, the cam transmission for transmitting the rotational motion from the fixed structures of the transfer device to the gripping units is a relatively bulky solution that requires a relatively large number of components on the gripping units to control the rotation simultaneously and independently with respect to the transmission for translating the suction cups.

The object of the present invention is to provide a gripping unit for a transfer device, which overcomes the drawbacks described above in a simple and inexpensive manner.

According to the present invention there is provided a gripping unit for a transfer device; the unit comprising:
- a supporting member that can be conveyed along a path;
- at least one gripping head to grip a product, in particular a food product; the gripping head being rotatable with respect to said supporting member about an axis that, in use, is substantially perpendicular to said path, and being translatable along said axis;
- a transmission to rotate said gripping head about said axis;
- a tappet element coupled, in use, to a first cam, so as to axially translate said gripping head;
**characterized in that** said transmission is defined by a transmission that converts the translational motion into rotational motion and rotates said gripping head in response to the axial translation of said gripping head.

The present invention will now be described with reference to the accompanying drawings, illustrating a non-limiting embodiment thereof, in which:
- figure 1 is a perspective view from above of a preferred embodiment of the gripping unit for a transfer device, according to the present invention;
- figure 2 shows the gripping unit of figure 1, on an enlarged scale and in a vertical cross-sectional view; and
- figure 3 is similar to figure 1 and illustrates the transfer device of figure 1 on an enlarged scale and with parts removed for the sake of clarity.

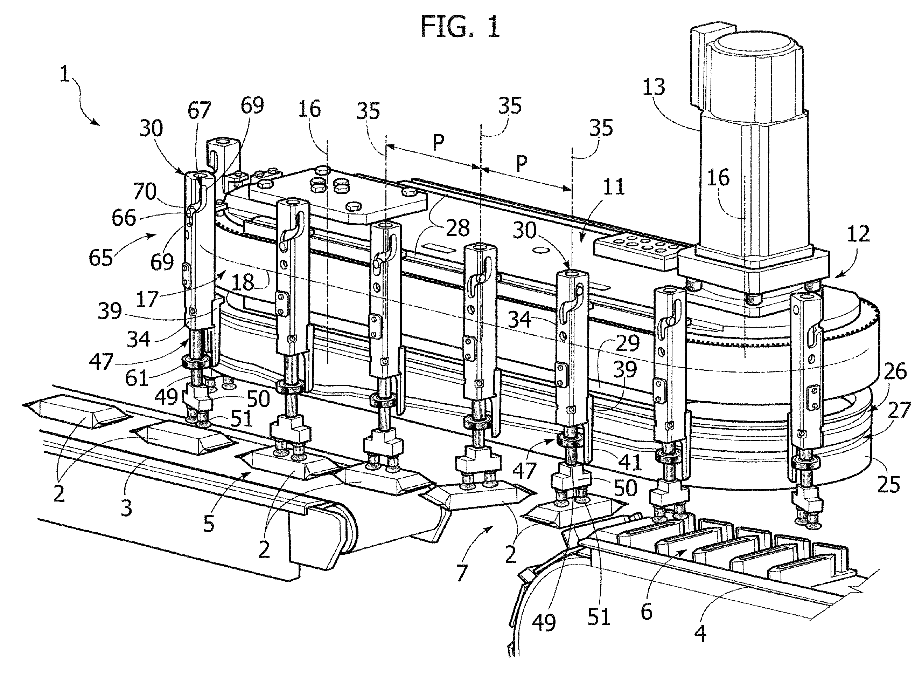

In figure 1, number 1 indicates a transfer device used to transfer products 2, in particular food products, which arrive in sequence and in an equally spaced manner on a conveyor 3 to be transferred onto a delivery conveyor 4. The ends of the conveyors 3 and 4 are arranged beneath the transfer device 1, they define, respectively, a pick-up area 5 and a deposit area 6 and, in particular, they are aligned with respect to one another. In the intermediate area 7 between the areas 5 and 6, the products 2 are transferred and, at the same time, they are rotated by 90° about respective vertical axes.

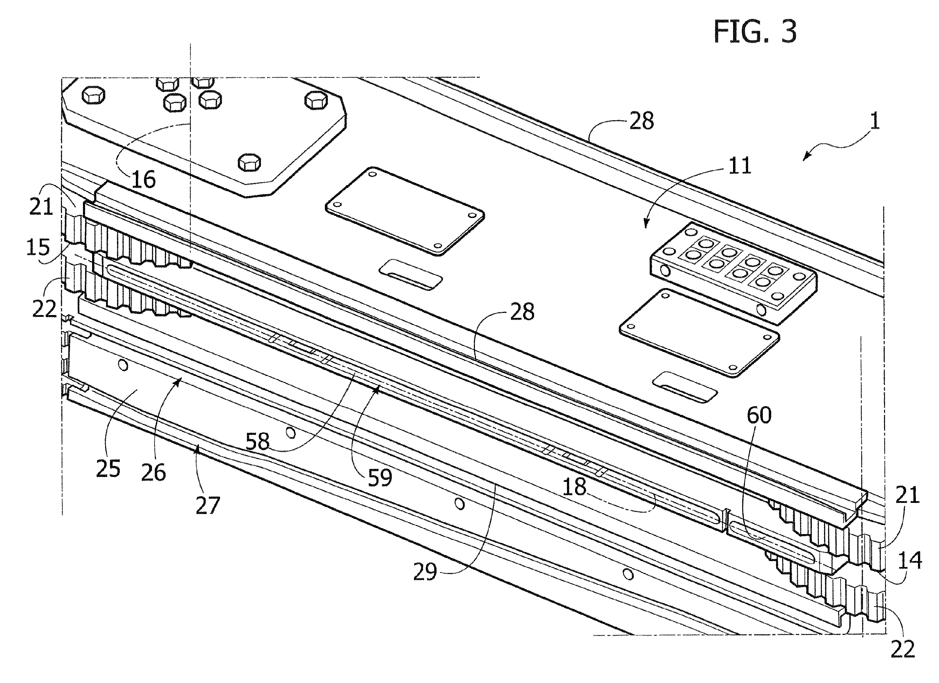

The transfer device 1 comprises a fixed structure 11 and a moving assembly 12, which comprises: a geared motor 13 arranged above the structure 11; a driving wheel 14 and a driven wheel 15 (figure 3), which are coupled to the structure 11 in a manner that is not illustrated and are rotatable about respective vertical axes 16; and a belt 17, which is wound around the wheels 14, 15 so as to define a horizontal loop-shaped path 18 comprising a rectilinear forward branch, above the areas 5,6,7 and a rectilinear return branch.

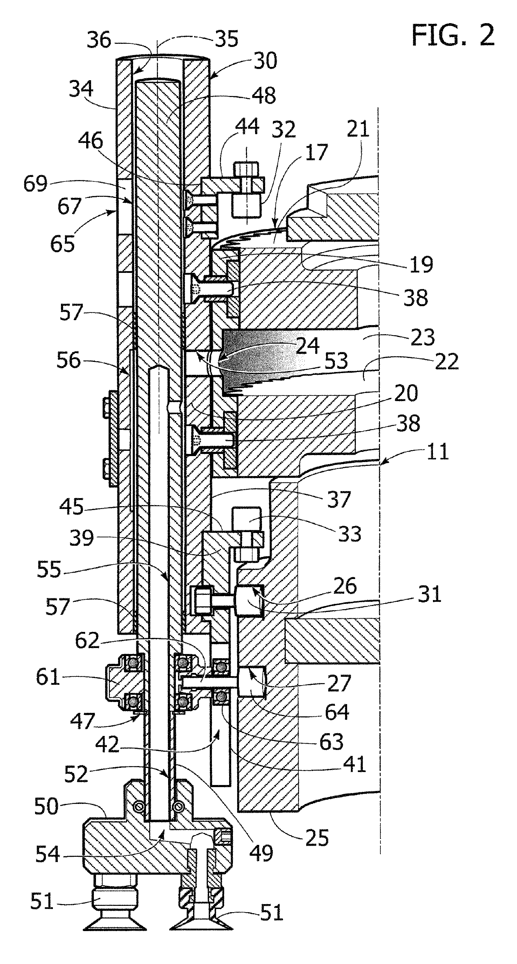

With reference to figure 2, the belt 17 comprises an upper band 19 and a lower band 20, which are internally toothed and coupled to respective upper gears 21 and respective lower gears 22 of the wheels 14,15.

The gears 21,22 of each wheel 14,15 are coaxial, vertically spaced, and fixed; in particular, they are a one-piece construction. The belt 17 also comprises a flat vertical intermediate portion 23, which joins the bands 19,20, is toothless, and has a series of horizontal through holes 24, equally spaced along the path 18 with a constant spacing P (figure 1).

With reference to figure 1, the structure 11 comprises an annular wall 25, which is vertical, is arranged beneath the belt 17, and, along its peripheral outer surface, defines a continuous guide 26 parallel to the path 18, and a continuous cam or track 27 arranged beneath the guide 26. Moreover, the structure 11 carries, in fixed positions, two guides 28 arranged above the belt 17 along the rectilinear forward and return branches, and two guides 29 arranged between the belt 17 and the wall 25 along the rectilinear forward and return branches.

According to that illustrated in figures 1 and 2, the transfer device 1 also comprises a plurality of gripping units 30, which are coupled to the guides 26,28,29 by means of respective supporting rollers 31,32,33, are arranged with a spacing P along the path 18, in correspondence with the holes 24, and are conveyed by the belt 17 along the path 18. The units 30 comprise respective sleeves or tubular bodies 34, which are elongated along respective vertical axes 35 and define respective axial cavities 36. A side wall 37 of each sleeve 34 rests directly on the vertical outer surface of the belt 17 and is fixed to the bands 19 and 20, for example by means of screws and blocks 38.

In each unit 30, the roller 31 is idly rotatable on a horizontal pin, which is orthogonal to the path 18 and is carried by a plate 39 facing the wall 25. The plate 39 is fixed to the wall 37 and comprises an end portion 41, which protrudes downwards with respect to the sleeve 34 and is fork-shaped so as to define a vertical guide seat 42 open at the bottom.

In each unit 30, the rollers 32 and 33 are coaxial, they are arranged on opposite sides of the belt 17 and are idly rotatable on respective vertical pins, which are carried by respective arms 44,45. The arms 44,45 protrude radially from the wall 37 and are defined, respectively, by the upper end of a bracket 46 fixed to the wall 37 and the upper end of the plate 39.

Each unit 30 comprises a corresponding rod 47, which extends along the axis 35 and comprises an upper portion 48 inside the sleeve 34, and a lower external portion 49. The end of the portion 49 is fixed to a member 50 bearing two suction cups 51, which are arranged side by side and are activated together when a vacuum is created in a pneumatic duct 52 inside the unit 30.

The duct 52 comprises: an outlet 53 made in the wall 37 and communicating with the corresponding hole 24; an end portion 54 made in the member 50 and communicating with the suction cups 51; an intermediate duct 55 made in the rod 47; and an annular chamber 56 that is permanently in communication, on the inner side, with the duct 55 and, on the outer side, with the outlet 53. The chamber 56 is defined radially by the surface outside the rod 47 and by the inside surface of the cavity 36, and axially by sealing rings 57, interposed radially between the rod 47 and the sleeve 34.

With reference to figure 3, the vacuum in the duct 52 is obtained by means of a pneumatic system that is not illustrated, which communicates via a manifold 58 with those holes 24 that, when the belt 17 is driven, are substantially in the areas 5 and 7. The manifold 58 is arranged in a vertical intermediate position between the gears 21,22 and has a front aperture 59 facing the portion 23. The edge of the aperture 59 is adjacent or in contact with the belt 17 so as to guarantee a fluid-tight seal between the manifold 58 and the ducts 52.

A manifold 60 is arranged in series with respect to the manifold 58, in correspondence with the area 6, and is depressurized so that the ducts 52 are vented and the suction cups 51 release their grip and deposit the products 2 on the conveyor 4; alternatively, the manifold 60 is supplied with compressed air to facilitate the detachment of the products 2 from the suction cups 51.

According to that illustrated in figure 2, the portion 49 of the rod 47 carries a coaxial collar 61, in an intermediate position between the member 50 and the sleeve 34. The collar 61 is axially fixed and angularly rotatable with respect to the rod 47 and carries a radial pin 62 which is arranged so as to face the wall 25. The pin 62, in turn, carries a ring 63 and a roller 64, which are idly rotatable about the axis of the pin 62. The ring 63 defines the outer ring of a bearing mounted on an intermediate portion of the pin 62 and engages the guiding seat 42, while the roller 64 is carried by the end of the pin 62 and defines a tappet element coupled to the cam 27.

The cam 27 is shaped in a manner that is not described in detail so as to lower the rod 47 and rest the suction cups 51 on the product 2, when the unit 30 is carried into the area 5 in a synchronized manner with the conveyor 3, so as to cause the rod 47 to perform a further vertical translational movement (in particular upwards) when the unit 30 travels through the area 7, and so as to raise the rod 47 slightly after depositing the product 2 on the conveyor 4.

With reference to figure 1, when the unit 30 passes through the area 7, the rod 47 rotates automatically thanks to the transmission 65 which converts the translational motion of the rod 47 into rotational motion. The transmission 65 comprise: a roller or a pin 66 with radial axis, carried by the upper portion 48 of the rod 47, and defining a tappet element; and a groove 67 made in the sleeve 34 above the chamber 56, engaged by the roller 66, and defining a cam. The cam 67 comprises two vertical end portions 69, which are angularly spaced by 90° about the axis 35 and are joined to one another by an intermediate portion 70 which is substantially S-shaped. During the upward and downward movement of the rod 47, the roller 66 slides in the cam 67 and, when it passes through the portion 70, it rotates about the axis 35 and causes the rod 47 to rotate with the product 2.

The transfer device 1 thus rotates the products 2 about respective axes 35 with respect to the position in which they arrive on the conveyor 3 thanks to transmissions 65 that are, each, associated with a corresponding unit 30 and thus are independent from each other.

By avoiding the use of cams mounted on the structure 11, the transmission 65 is relatively compact in size and the costs of producing and assembling the transfer device 1 are limited. The fact that the transmission 65 is inside the sleeves 34 achieves a further reduction in the overall dimensions and makes it possible to protect the transmission 65 against external agents, such as dust.

Moreover, the transfer device 1 carries and rotates the products 2 without causing collisions, it avoids the need for dedicated actuators and electronic control and command systems to perform rotational and vertical translation of the products 2, while guaranteeing a high level of precision when positioning the products 2.

Moreover, the vacuum in the suction caps 51 is generated simply using a compact system, thanks to the pneumatic ducts 52 which are made inside the units 30, and without dedicated pneumatic valves or controls for each pair of suction cups 51, thanks to the manifold 58.

Lastly, from the above description, it is clear that modifications and variations may be made to the transfer device 1 described herein without departing from the scope of the present invention.

In particular, the transfer device 1 could be used to transport products in fields other than the food industry.

The suction cups 51 could be activated in a different way to that described by way of example, in particular without the ducts 52, or they could be replaced with pliers, or they could be replaced with a suction plate provided, along its perimeter, with a sealing element that comes into contact with the product to be picked up and carried.

Moreover, the rollers 64 could be replaced with different tappet elements, for example they could be carried by levers, without using the guiding seats 42; and/or the ducts 52 could be outside the rods 47 or the sleeves 34; and/or the cams 67 could produce rotations of angles other than 90° about the respective axes 35; and/or the sleeves 34 could be replaced by supporting members fixed to the belt 17 having different structural features and sizes; and/or the belt 17 could be replaced by a chain.

Lastly, the shape of the transfer device 1 could be different to that illustrated by way of example, in particular with the areas 5 and 7 in positions that are not aligned with one another and, thus, changing the direction in which the products 2 are transferred between the conveyors 3 and 4.

## Claims

1. Gripping unit (30) for a transfer device (1); the unit comprising:
- a supporting member (34) that can be conveyed along a path (18);
- at least one gripping head (51) to grip a product (2), in particular a food product; the gripping head (51) being rotatable with respect to said supporting member (34) about an axis (35) that, in use, is substantially perpendicular to said path (18), and being translatable along said axis (35);
- a transmission (65) to rotate said gripping head (51) about said axis (35);
- a tappet element (64) coupled, in use, to a first cam (27), so as to axially translate said gripping head (51);
**characterized in that** said transmission (65) is defined by a transmission for converting the translational motion into rotational motion so as to rotate said gripping head (51) in response to the axial translation of said gripping head (51).

2. Unit according to claim 1, **characterized in that** said transmission for converting the motion (65) comprise a second cam (67).

3. Unit according to claim 2, **characterized in that** said second cam (67) is carried in a fixed position by said supporting member (34).

4. Unit according to claim 3, **characterized in that** said supporting member is defined by a tubular member (34) extending along said axis (35), and **in that** said second cam (67) is defined by a lateral groove made in said tubular body (34).

5. Unit according to claim 4, **characterized by** comprising an axial rod (47), which is coupled in an axially sliding manner to said tubular member (34) and carries said gripping head (51) in a fixed position.

6. Unit according to any of the previous claims, **characterized by** comprising:
- at least one suction element (51) defining part of said gripping head,
- an axial rod (47) carrying said suction element (51), and
- a pneumatic duct (52) to create a vacuum in said suction element (51); said pneumatic duct (52) comprising a duct (55) inside said axial rod (47).

7. Unit according to claim 6, **characterized in that:**
- said supporting member is defined by a tubular member (34) extending along said axis (35), and
- said pneumatic duct (52) comprises an annular chamber (56) defined radially by said tubular member (34) and by said axial rod (47) and axially by sealing rings (57) which couple said axial rod (47) to said tubular member (34).

8. Transfer device (1) for transferring products (2), in particular food products; said transfer device comprising:
- a plurality of gripping units (30) equally spaced along a path (18) and produced according to any one of the previous claims;
- moving means (12), of the belt or chain type, to convey said gripping units (30) along said path (18);
- a first cam (27) extending along at least a portion of said path (18) and cooperating with the tappet elements (64) of said gripping units (30) to translate the gripping heads (51) along the respective axes (35).

9. Transfer device according to claim 8, **characterized in that** the supporting members (34) of said gripping units (30) are defined by tubular members (34) comprising a wall (37) resting directly on and fixed to the belt or chain (17) of said moving means (12).

10. Transfer device according to claim 8 or 9, **characterized in that** said moving means (12) comprise a driving belt (17) having a plurality of through holes (24) equally spaced along said path (18) and communicating with respective pneumatic ducts (52) inside said gripping units (30).

11. Transfer device according to claim 10, **characterized in that** said driving belt (17) comprises:
- an upper band (19) and a lower band (20), which are internally toothed; and
- a flat intermediate portion (23) arranged between said upper and lower bands (19,20) and provided with said through holes (24).

12. Transfer device according to claim 11, **characterized by** comprising a first manifold (58), which faces said intermediate portion (23) and communicates with a plurality of said through holes (24).

13. Transfer device according to claim 12, **characterized by** comprising a second manifold (60), pneumatically isolated from said first manifold (58), facing said intermediate portion (23) and arranged in series with respect to said first manifold (58) along said path (18).
